(19) Europäisches Patentamt
European Patent Office
Office européen des brevets

(11) Veröffentlichungsnummer : **0 215 258 B1**

(12) # EUROPÄISCHE PATENTSCHRIFT

(45) Veröffentlichungstag der Patentschrift : **22.02.89**

(51) Int. Cl.⁴ : **C 08 G 75/02**

(21) Anmeldenummer : **86110674.8**

(22) Anmeldetag : **01.08.86**

(54) **Verfahren zur Herstellung von hochmolekularen, gegebenenfalls verzweigten Polyarylensulfiden.**

(30) Priorität : **13.08.85 DE 3528977**

(43) Veröffentlichungstag der Anmeldung : **25.03.87 Patentblatt 87/13**

(45) Bekanntmachung des Hinweises auf die Patenterteilung : **22.02.89 Patentblatt 89/08**

(84) Benannte Vertragsstaaten : **BE DE FR GB IT**

(56) Entgegenhaltungen :
**EP-A- 0 040 747**
**EP-A- 0 075 769**
**EP-A- 0 142 024**
**DE-A- 2 139 535**

(73) Patentinhaber : **BAYER AG**
**Konzernverwaltung RP Patentabteilung**
**D-5090 Leverkusen 1 Bayerwerk (DE)**

(72) Erfinder : **Ostlinning, Edgar, Dr.**
**Rembrandtstrasse 37**
**D-4000 Düsseldorf (DE)**
Erfinder : **Idel, Karsten, Dr.**
**Am Schwarzkamp 38**
**D-4150 Krefeld (DE)**
Erfinder : **Bottenbruch, Ludwig, Dr.**
**Wöhlerstrasse 5**
**D-4150 Krefeld (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**EP 0 215 258 B1**

Jouve, 18, rue St-Denis, 75001 Paris, France

**Beschreibung**

Die Erfindung betrifft ein Verfahren zur Herstellung von hochmolekularen, gegebenenfalls verzweigten Polyarylensulfiden. Diese können ohne Katalysator in einem polaren organischen Lösungsmittel durch Umsetzung von Dihalogenaromaten mit Mischungen aus Natrium- und Kalium-sulfiden und -hydrogensulfiden hergestellt werden.

Die bekannten Verfahren setzen, um hochmolekulare Polyarylensulfide zu erhalten, Hilfsstoffe ein. Dies können Cosolventien wie Dialkylcarbonsäureamide oder Katalysatoren wie Alkalicarboxylate, Salze von Polycarbonsäuren, Sulfonsäuren, Halogenide, Phosphate oder Phosphonate sein. Sie können auch Na- und K-Ionen enthalten (z. B. EP-A 142 024) Demgegenüber wurde nun ein Verfahren gefunden, nach dem ohne derartigen Hilfsstoffe und Katalysatoren hochmolekulares, gegebenenfalls verzweigtes Polyarylensulfid hergestellt werden kann, wenn ein bestimmtes Verhältnis von Na- zu K-Ionen eingehalten wird.

Gegenstand der Erfindung ist ein Verfahren zur Herstellung von gegebenenfalls verzweigten Polyarylensulfiden ohne Katalysator und Hilfsstoffe aus

a) 50-100 Mol-% Dihalogenaromaten der Formel

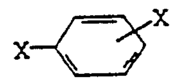

(I)

und 0-50 Mol-% Dihalogenaromaten der Formel (II)

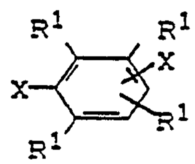

(II)

in denen

X für zueinander meta oder para-ständiges Halogen wie Chlor oder Brom steht und

$R^1$ gleich oder verschieden ist und Wasserstoff, $C_1$-$C_{20}$-Alkyl, $C_5$-$C_{20}$-Cycloalkyl, $C_6$-$C_{24}$-Aryl, $C_7$-$C_{24}$-Alkylaryl, $C_7$-$C_{24}$-Arylalkyl sein kann, wobei zwei zueinander orthoständige Reste $R^1$ zu einem aromatischen oder heterocyclischen Ring verknüpft sein können und immer ein Rest $R^1$ verschieden von Wasserstoff ist und

b) 0 bis 5 Mol.-%, bevorzugt 0 bis 1,25 Mol-%, bezogen auf die Summe der Dihalogenaromaten der Formel I und II, eines Tri- oder Tetrahalogenaromaten der Formel

$$ArX_n \qquad (III)$$

wobei

Ar ein aromatischer oder heterocyclischer Rest ist,

X für Halogen wie Chlor oder Brom steht und

n für die Zahl 3 oder 4 steht und

c) Mischungen aus Natrium- und Kalium-sulfiden und hydrogensulfiden in

d) einem polaren organischen Lösungsmittel, dadurch gekennzeichnet, daß die Mischung aus Natrium- und Kaliumsulfiden und -hydrogensulfiden Natrium- und Kaliumionen im Verhältnis von 95 zu 5 bis 50 zu 50 Molprozent enthält.

Die Reaktionszeit kann innerhalb einer weiten Spanne variiert werden. Sie kann von weniger als einer Stunde bis zu mehreren Tagen, vorzugsweise von 1 Stunde bis zu 48 Stunden, besonders bevorzugt 2 bis 18 Stunden, betragen.

Die Reaktion kann kontinuierlich oder diskontinuierlich durchgeführt werden.

Die Reaktionspartner können zusammen vorgelegt werden und zur Reaktion gebracht werden. Wasserhaltige Stoffe können vor der Reaktion getrennt entwässert werden. Es ist jedoch auch möglich, wasserhaltige Stoffe vor der Umsetzung zum Polymeren im Reaktionsgemisch durch Destillation von Wasser zu befreien. Es ist auch möglich, die Einsatzstoffe portionsweise zu dosieren oder nacheinander in beliebiger Reihenfolge der Reaktionsmischung zuzugeben.

Erfindungsgemäß können meta- und para-Dihalogenaromaten der Formel (I) bzw. (II) eingesetzt werden. In diesem Fall kann das Verhältnis meta- zu para-Dihalogenaromat bis zu 30 : 70 betragen.

Zur Erhaltung von thermoplastisch verarbeitbaren Polyarylensulfiden werden besonders bevorzugt p-Dihalogenaromaten eingesetzt.

Natriumsulfid und Kaliumsulfid können aus Schwefelwasserstoff und Natrium- oder Kaliumhydroxid hergestellt werden.

Erfindungsgemäß sind in der Umsetzungslösung Natriumionen und Kaliumionen im Verhältnis 95 zu 5 bis 50 zu 50 Molprozent, bezogen auf die Gesamtmenge von Natrium- und Kaliumionen, vorhanden.

Um das erfindungsgemäße Molverhältnis an Natium-/Kaliumionen zu erhalten, können sowohl die Natrium-/oder Kaliumsulfide oder -hydrogensulfide verwendet werden. Es ist auch möglich, z. B. Natriumhydrogensulfid mit Kaliumhydroxid in entsprechender Menge umzusetzen und vice versa.

Beispiele für erfindungsgemäß einzusetzende Dihalogenaromaten der Formel (I) sind vorzugsweise :

1,4-Dichlorbenzol, 1,4-Dibrombenzol, 1-Brom-4-chlorbenzol, 1,3-Dichlorbenzol, 1,3-Dibrombenzol, 1-Brom-3-chlorbenzol. Sie sind allein oder im Gemisch miteinander verwendbar. Besonders bevorzugt sind 1,4-Dichlorbenzol und/oder 1,4-Dibrombenzol.

$R^1$ steht in Formel II vorzugsweise für Wasserstoff, $C_1$-$C_4$-Alkyl, $C_5$-$C_{10}$-Cycloalkyl, $C_6$-$C_{10}$-Aryl, $C_7$-$C_{14}$-Alkylaryl oder $C_7$-$C_{14}$-Aralkyl. Weiterhin können zwei zueinander orthoständige Reste $R^1$ einen ankondensierten aromatischen Ring mit insgesamt 6 C-Atomen oder einen ankondensierten heterocyclischen Ring mit 5-6 Ringatomen und 1-3 Heteroatomen wie N, O oder S bilden.

Beispiele für erfindungsgemäß einzusetzende Diahlogenaromaten der Formel (II) sind :

2,5-Dichlortoluol, 2,5-Dichlorxylol, 1,4-Dichlor-2-ethylbenzol, 1,4-Dibrom-2-ethylbenzol, 1-Brom-4-chlor-2-ethylbenzol, 1,4-Dichlor-2,3,5,6-tetramethylbenzol, 1,4-Dichlor-2-cyclohexylbenzol, 2,5-Dichlordiphenyl, 2-Benzyl-1,4-dichlorbenzol, 2,5-Dibromdiphenyl, 2,5-Dichlor-4'-methyl-diphenyl, 2,5-Dibrom-4'-methyl-diphenyl, 1,4-Dichlor-2-hexylbenzol, 2,4-Dichlortoluol, 2,4-Dichlorxylol, 2,4-Dibromcumol und 1,3-Dichlor-5-cyclohexylbenzol. Sie sind allein oder im Gemisch miteinander einsetzbar.

Ar steht vorzugsweise für einen aromatischen Rest mit 6-24 C-Atomen oder heterocyclischen Rest mit 6-24 Ringatomen, besonders bevorzugt für einen aromatischen Rest mit 6-10 C-Atomen oder heterocyclischen Rest, oder bis zu 3 Heteroatome wie N, S, O enthalten kann.

Beispiele für erfindungsgemäß einzusetzende Tri- bzw. Tetrahalogenaromaten der Formel (III) sind :

1,2,3-Trichlorbenzol, 1,2,4-Trichlorbenzol, 1,2,4-Tribrombenzol, 1,3,5-Trichlor-2,4,6-trimethyl-benzol, 1,2,3-Trichlornaphthalin, 1,2,6-Trichlornaphthalin, 2,3,4-Trichlortoluol, 2,3,6-Trichlortoluol, 1,2,3,4-Tetrachlornaphthalin, 1,2,4,5-Tetrachlorbenzol, 2,2'-4,4'-Tetrachlordiphenyl, 1,3,5-Trichlortriazin.

Erfindungsgemäß geeignete organische Lösungsmittel sind z. B. Lactame wie N-Alkyllactame, beispielsweise N-Methylpyrrolidon, N-Ethylpyrrolidon, N-Methylpiperidon, N-Isopropylpyrrolidon, N-Methylcaprolactam, N-Ethylcaprolactam oder cyclische Harnstoffe wie 1,3-Dimethyl-imidazolidinon-(2) oder andere polare organische Lösungmittel wie 1-Methyl-1-oxo-phospholan.

Der Siedepunkt der Lösungsmittel sollte bei 200 °C bis 280 °C liegen.

Die erfindungsgemäß hergestellten Polyarylensulfide können mit anderen Polymeren, Pigmenten und Füllstoffen, beispielsweise Graphit, Metallpulver, Glaspulver, Quarzmehl, Glasfasern und Kohlefasern gemischt oder mit den für Polyarylensulfiden üblichen Stabilisatoren oder Entformungsmitteln versetzt werden. Im allgemeinen wird das Schmelzfließverhalten von Polyarylensulfiden nach ASTM 1238-70 bei 316 °C unter Verwendung eines 5 kg-Gewichtes gemessen und in g/10 Minuten angegeben.

Bei hohen Schmelzflußwerten kann diese Messung jedoch aufgrund der hohen Ausflußrate der Polymerschmelze Schwierigkeiten bereiten.

Es wurde deshalb die Schmelzviskosität der Polymerschmelze (in Pa · s) bei 306 °C in Abhängigkeit von der Schubspannung (in Pa · s) mit Hilfe des Istron-Rotationsviskosimeters bestimmt.

Man kann auf diese Weise die Schmelzviskosität in einem sehr weiten Bereich von $10^{-1}$ bis $10^7$ Pa · s bestimmen. In dem Instron-Rheometer wird das Polymer zwischen einer festen Platte und einem drehbaren Kegel geschmolzen und das Drehmoment des Kegels bestimmt. Aus dem Drehmoment, der Winkelgeschwindigkeit und den apparativen Daten kann die Schmelzviskosität von der Schubspannung errechnet werden. Verwendet wurde das Rheometer Modell 3250 der Fa. Instron ; Durchmesser des Kegels und der Platte 2 cm.

Die erfindungsgemäßen Polyarylensulfide besitzen direkt nach der Isolierung aus dem Reaktionsgemisch im allgemeinen Schmelzviskositäten von $0,1.10^1$ bis $5.10^4$ Pa · s, vorzugsweise von $0,1.10^2$ bis $2,5.10^4$ Pa · s und gute farbliche Eigenschaften.

Ebenso können Polyarylensulfide über chromatografische Verfahren analysiert werden, um Aussagen über Molekulargewicht und Molekulargewichtsverteilung zu machen.

Hierfür sind z. B. Hochdruckflüssigkeitschromatografie (HPLC) oder Gelpermeationschromatografie (GPC) geeignet.

Als stationäre Phase können übliche Trägermaterialien verwendet werden, z. B. Li-Chropren®, Lobar®, Lichorsorb®, Lichrosphor®, Perisorb®, Hibar®, Fractogel®, Fractosil®, Ultrastyragel®, Microstyragel®, Zorbax®, Bondagel® und Shodex®.

Als Lösungsmittel und Laufmittel können übliche Lösungsmittel verwendet werden. Diese sollten das Polymere ausreichend lösen. Z. B. sind 1-Chlornaphthalin, Diphenyl, N-Methylpyrrolidon, N-Cyclohexylpyrrolidon, N-Methylpiperidon, N-Methylcaprolactam, N-Methyllaurinlactam, Sulfolan, N,N'-Dimethylimidazolidinon, N,N'-Dimethylpiperazinon, Hexamethylphosphorsäuretriamid, 1-Methyl-1-oxophospholan und deren Mischungen geeignet.

Bei den chromatografischen Analysenmethoden können absolute oder relative Eichungen durchgeführt werden. Als Eichsubstanzen für relative Eichungen eignen sich beispielsweise übliche Polymere wie z. B. Polystyrol, Polyethylen, Polyethylenterephthalat, Polybutylenterephthalat, Polyester wie rein aromatische Polyester, Polycarbonat, Polyamide wie PA6, PA66, PA11, Polysulfone oder Polyethersulfone.

Die Chromatographie zur analytischen Bestimmung der Molekulargewichte, bzw. Molekulargewichtsverteilung kann bei verschiedenen Drucken von 1 bis 10 bar durchgeführt werden. Die chromatografische Bestimmung wird bei einer Temperatur von Raumtemperatur bis 250 °C durchgeführt.

Weiterhin können zur Verbesserung der Meßgenauigkeit der zur analysierenden Probe Substanzen wie Alkalihalogenide, Erdalkalicarboxylate, Phosphonium- oder Ammoniumverbindungen zugesetzt werden.

Bei der Auswertung der so ermittelten Analysendaten können die gewichtsgemittelten Molekulargewichte $M_w$ angegeben werden. Diese betragen 25 000 bis 500 000, vorzugsweise 25 000 bis 300 000, besonders bevorzugt 25 000 bis 150 000.

Sie können direkt durch Extrusion, Extrusionsblasen, Spritzgießen oder sonst übliche Verarbeitungstechniken zu Folien, Formkörpern oder Fasern verarbeitet werden. Diese können in üblicher Weise Verwendung finden, z. B. als Automobilteile, Armaturen, Elektroteile, z. B. Schalter, elektronische Tafeln, chemikalienresistente und verwitterungsstabile Teile und Apparate wie Pumpengehäuse und Pumpenflügelräder, Ätzbadschalen, Dichtungsringe, Teile von Büromaschinen und Fernmeldeeinrichtungen, sowie Haushaltsgeräte, Ventile, Kugellagerteile.

Beispiel 1

In einem 4-l Dreihalskolben, der mit Thermometer, Rührer und Rückflußkühler ausgerüstet ist, werden 2 210 g N-Methylcaprolactam, eine Mischung von Natrium- und Kaliumsulfid und -hydrogensulfid, bestehend aus 11,01 mol Natrium- und 2,75 mol Kaliumionen sowie 5,92 mol Sulfid- und 1,92 mol Hydrogensulfidionen, die wasserfrei ist, und 6,4 mol 1,4-Dichlorbenzol vorgelegt und 12 Stunden unter Rühren zum Rückfluß erhitzt. Man erhält ein Polyarylensulfid in 96,4 % Ausbeute bezogen auf 1,4-Dichlorbenzol mit einer Schmelzviskosität von $n_m$ = 250 Pa · s.

Beispiel 2

In einem 4-l Kolben, der mit Thermometer, Rührer, Tropftrichter und Destillationsaufsatz mit Destillatteiler ausgerüstet ist, werden 2 210 g N-Methylcaprolactam und 6,4 mol 1,4-Dichlorbenzol vorgelegt und auf ca. 210 °C erhitzt. Eine Lösung aus Natrium-Kaliumsulfid und -hydrogensulfid wie in Beispiel 1, in insgesamt 550 ml Wasser wird so zugetropft, daß das gesamte Wasser sofort azeotrop mit 1,4-Dichlorbenzol abdestilliert. Das Wasser wird im Destillatteiler abgetrennt, 1,4-Dichlorbenzol wird in das Reaktionsgefäß zurückgeführt. Anschließend wird weitere 10 Stunden zum Rückfluß erhitzt. Man erhält ein Polyarylensulfid in 95,9 % Ausbeute bezogen auf 1,4-Dichlorbenzol mit einer Schmelzviskosität von $n_m$ = 195 Pa · s.

Beispiel 3 (Vergleich)

Wie Beispiel 2, jedoch mit 13,76 mol Natriumionen ohne Kaliumionen. Man erhält ein Polyarylensulfid in 87,1 % Ausbeute bezogen auf 1,4-Dichlorbenzol mit einer Schmelzviskosität $n_m > 1$ Pa · s.

Beispiel 4 (Vergleich)

Wie Beispiel 1 jedoch mit 13,76 mol Kaliumionen ohne Natriumionen. Man erhält ein Polyarylensulfid in einer Ausbeute von 83,6 % bezogen auf 1,4-Dichlorbenzol mit einer Schmelzviskosität $n_m > 1$ Pa · s.

**Patentansprüche**

1. Verfahren zur Herstellung von gegebenenfalls verzweigten Polyarylensulfiden aus

a) 50-100 Mol-% Dihalogenaromaten der Formel

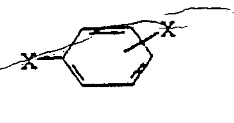

(I)

und 0-50 Mol-% Dihalogenaromaten der Formel (II)

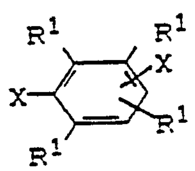

(II)

in denen

X für zueinander meta oder para-ständiges Halogen wie Chlor oder Brom steht und

$R^1$ gleich oder verschieden ist und Wasserstoff, $C_1$-$C_{20}$-Alkyl, $C_5$-$C_{20}$-Cycloalkyl, $C_6$-$C_{24}$-Aryl, $C_7$-$C_{24}$-Arylalkyl, $C_7$-$C_{24}$-Alkylaryl sein kann, wobei zwei zueinander orthoständige Reste $R^1$ zu einem aromatischen oder heterocyclischen Ring verknüpft sein können und immer ein Rest $R^1$ verschieden von Wasserstoff ist und

b) 0 bis 5 Mol-%, bevorzugt 0 bis 1,25 Mol-%, bezogen auf die Summe der Dihalogenaromaten der Formel I und II, eines Tri- oder Tetrahalogenaromaten der Formel

$$ArX_n \qquad (III)$$

wobei

Ar ein aromatischer oder heterocyclischer Rest ist,

X für Halogen wie Chlor oder Brom steht und

n für die Zahl 3 oder 4 steht und

c) Mischungen aus Natrium- und Kaliumsulfiden und -hydrogensulfiden in

d) einem polaren organischen Lösungsmittel, dadurch gekennzeichnet, daß die Mischung aus Natrium- und Kaliumsulfiden und -hydrogensulfiden Natrium- und Kaliumionen im Verhältnis von 95 zu 5 bis 50 zu 50 Molprozent enthält.

2. Verfahren nach Anspruch 1, dadurch gekennzeichnet, daß die Umsetzungstemperatur 200 bis 270 °C beträgt.

3. Verfahren nach Anspruch 1, dadurch gekennzeichnet, daß N-Methylcaprolactam als Lösungsmittel eingesetzt wird.

4. Verfahren nach Anspruch 1, dadurch gekennzeichnet, daß die Umsetzung kontinuierlich durchgeführt wird.

**Claims**

1. A process for the production of optionally branched polyarylene sulfides from

a) 50 to 100 mol-% aromatic dihalogen compounds corresponding to the following formula

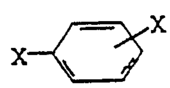

(I)

and 0 to 50 mol-% aromatic dihalogen compounds corresponding to the following formula

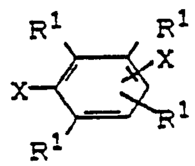

(II)

in which

X represents halogens, such as chlorine or bromine, in the meta or para position to one another and

$R^1$ may be the same or different and represents hydrogen, $C_1$-$C_{20}$ alkyl, $C_5$-$C_{20}$ cycloalkyl, $C_6$-$C_{24}$ aryl, $C_7$-$C_{24}$ arylalkyl, $C_7$-$C_{24}$ alkylaryl ; two substituents $R^1$ in the ortho position to one another may be attached to form an aromatic or heterocyclic ring and one substituent $R^1$ is always different from hydrogen and

b) 0 to 5 mol-%, preferably 0 to 1.25 mol-%, based on the sum of the aromatic dihalogen compounds of formulae I and II, of an aromatic tri- or tetrahalogen compound corresponding to the formula

$$ArX_n \qquad (III)$$

in which

Ar is an aromatic or heterocyclic radical,

X is halogen, such as chlorine or bromine, and

n is the number 3 or 4, and

c) mixtures of sodium and potassium sulfides and hydrogen sulfides in

d) a polar organic solvent,

characterized in that the mixture of sodium and potassium sulfides and hydrogen sulfides contains sodium and potassium ions in a ratio of 95 : 5 to 50 : 50 mol-%.

2. A process as claimed in claim 1, characterized in that the reaction temperature is in the range from 200 to 270° C.

3. A process as claimed in claim 1, characterized in that N-methyl caprolactam is used as the solvent.
4. A process as claimed in claim 1, characterized in that the reaction is carried out continuously.

## Revendications

1. Procédé pour la fabrication de poly(sulfures d'arylène) éventuellement ramifiés à partir de
a) 50-100 moles pour cent de composés aromatiques dihalogénés de formule

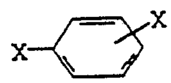

(I)

et 0-50 moles pour cent de composés aromatiques dihalogénés de formule (II)

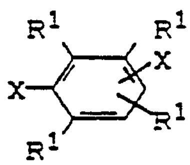

(II)

dans lesquelles

X représente chaque fois un atome d'halogène tel que le chlore ou le brome, ces substituants se trouvant en position méta ou para mutuelle et

$R^1$ est chaque fois identique ou différent et peut représenter dans chaque cas un atome d'hydrogène, un groupe alkyle en $C_1$-$C_{20}$, cycloalkyle en $C_5$-$C_{20}$, aryle en $C_6$-$C_{24}$, arylalkyle en $C_{27}$-$C_{24}$, alkylaryle en $C_7$-$C_{24}$, deux restes $R^1$ en position ortho mutuelle pouvant être raccordés en un cycle ou noyau aromatique ou hétérocyclique, un reste $R^1$ étant toujours différent de l'hydrogène et

b) 0 à 5 moles pour cent, de préférence 0 à 1,25 moles pour cent, par rapport à la somme des composés aromatiques dihalogénés de formules I et II, d'un composé aromatique tri- ou tétrahalogéné de formule

$$ArX_n \qquad (III)$$

dans laquelle

Ar représente un reste aromatique ou hétérocyclique,

X représente un halogène tel que le chlore ou le brome et

n représente le nombre 3 ou 4 et

c) des mélanges de sulfures et hydrogénosulfures de sodium et de potassium, dans

d) un solvant organique polaire, caractérisé en ce que le mélange de sulfures et hydrogénosulfures de sodium et de potassium contient des ions de sodium et de potassium dans un rapport de 95 sur 5 à 50 sur 50 moles pour cent.

2. Procédé selon la revendication 1, caractérisé en ce que la température de réaction se trouve dans l'intervalle de 200 à 270 °C.

3. Procédé selon la revendication 1, caractérisé en ce que l'on utilise comme solvant du N-méthylcaprolactame.

4. Procédé selon la revendication 1, caractérisé en ce que la réaction est effectuée en continu.